# EUROPEAN PATENT SPECIFICATION

(11) **EP 0 990 906 B1**
(45) Date of publication and mention of the grant of the patent: **15.03.2006**
(21) Application number: 98810974.0
(22) Date of filing: 28.09.1998
(51) Int. Cl.: G01N 35/04, B01L 9/00

(54) **Apparatus for transporting components within an automatic analyzer system**
Vorrichtung zum Transport von Gegenständen in eines automatisches Analysesystem
Dispositif de transport de composants dans un système d'analyses automatisé

(43) Date of publication of application: 05.04.2000
(73) Proprietor: F. HOFFMANN-LA ROCHE AG, 4070 Basel (CH)
(72) Inventor: Caratsch, Thomas, 8932 Mettmenstetten (CH); Vischer, Peter, 6403 Küssnacht (CH)
(74) Representative: Ventocilla, Abraham

(56) References cited:
- EP-A- 0 856 736
- WO-A-93/15407
- WO-A-98/01760
- DE-A- 3 841 961
- DE-A- 19 742 160
- US-A- 5 207 986
- US-A- 5 429 010

## Description

The invention relates to an apparatus for transporting components within an automatic analyzer system.

The invention relates in particular to an apparatus for transporting components within an automatic analyzer system for analyzing biological samples, which system comprises at least two apparatuses which form part of that system, wherein at least one of said apparatuses includes means for automatically analyzing said biological samples.

Since not all possible analysis can be performed with a single analyzer, the equipment used by the laboratories often comprises a plurality of specialized analyzers of various types and additionally supplementary equipment like the one for performing preliminary operations such as preparation of biological samples before they are introduced into specialized analyzers. In order to satisfy the equipment needs of laboratories, such equipment has to be available in a great diversity of configurations, and it should be possible to modify an initial configuration and to supplement it with additional equipment if and when necessary.

Moreover various system components like sample tubes, reagent containers, and accessories like disposable pipetting tips have often to be transferred from one apparatus forming part of the analyzer system to another.

Since a high degree of automation is desirable in laboratories where clinical chemistry analysis are performed on large numbers of patient samples, the situation described above gives rise to the need for means for transporting

system components, e.g. sample tubes, reagent containers, disposable pipetting tips, etc., from one of the apparatuses forming part of the analyzer system to at least another one of the apparatuses forming part of the analyzer system.

WO 98 0 1760 (Beckman Instruments) describes analyzer systems with transport means according to the preamble of claim 1.

Transport means like robot arms and grippers known in the prior art for transporting components in analyzer systems have two major disadvantages. On the one hand, they are relatively expensive, because they require high cost components like sensors and complex control means. On the other hand, known transport systems require a very accurate mechanical adjustments and installation work in order to operate successfully.

An aim of the instant invention is therefore to provide a simple and low cost apparatus for transporting components within an automatic analyzer system.

According to the invention the above aim is achieved with an apparatus defined by claim 1. Preferred embodiments of this apparatus are defined by claims 2 to 9.

A main advantage of the apparatus according to the invention is that it provides very effective transport means at a relatively low cost, because the principle of operation of the apparatus according to the invention does not require expensive sensor components or accurate mechanical adjustments and installation work in order to operate successfully.

In order that the invention may be readily understood, preferred embodiments thereof will now be described in more detail, by way of example, with reference to the accompanying drawings, wherein
Fig. 1 is a schematic perspective view of a first embodiment of an apparatus 11 according to the invention arranged between a first apparatus 22 and a second apparatus 32 which form part of an analyzer system.
Fig. 2 is a schematic perspective view of a component carrier 12 which forms part of a apparatus 11 in Figure 1.
Fig. 3 is a schematic perspective view of a first component 61 which is apt to be carried by component carrier 12 in Figures 1 and 2.
Fig. 4 is a schematic perspective view of a second component 62 which is apt to be carried by component carrier 12 in Figures 1 and 2.
Fig. 5 is a schematic perspective view of tray 41 and component carrier 12 in Fig. 1
Fig. 6 is a schematic perspective view of a telescopic arm 45 which is an embodiment of the horizontal drive means 14 shown in Figure 1.
Fig. 7 is a schematic perspective view showing use of telescopic arm 45 shown in Figure 6 for positioning a component carrier 12 in loading bay 27 shown in Figure 1.
Fig. 8 is a schematic top view showing introduction of component carrier 12 in loading bay 37 shown in Figure 1.
Fig. 8a a partial cross-sectional view showing in more detail the shape of the parts of component carrier 12 and loading bay 37 which cooperate with each other when carrier 12 in positioned in loading bay 37.
Fig. 9 is a schematic perspective view showing component carrier 12 positioned in loading bay 37 shown in Figure 1.
Fig. 10 is a schematic perspective view of an embodiment of an apparatus 11 according to the invention.
Fig. 11 is a schematic perspective view illustrating the connection of an apparatus 11 according to the invention to a first apparatus 22 which forms part of an analyzer system.
Fig. 12 is a schematic perspective view illustrating the connection of an apparatus 11 according to the invention to a second apparatus 32 which forms part of an analyzer system.
Fig. 13 is a schematic front view showing a first embodiment of an apparatus 11 according to the invention arranged between a first apparatus 22 and a second apparatus 32 which form part of an analyzer system.
Fig. 14 is a schematic side view showing of apparatuses 11 and 32 shown in Fig. 13.
Fig. 15 is a schematic front view showing a second embodiment of an apparatus 72 according to the invention arranged between a apparatuses 22 and 91 on one side and apparatus 32 on the opposite side, apparatuses 22, 91 and 32 forming part of an analyzer system.
Fig. 16 is a schematic side view showing of apparatuses 72, 22 and 91 shown in Fig. 15.
Fig. 17 is a block diagram of an analyzer system comprising several apparatuses 71, 72, 81 according to the invention.

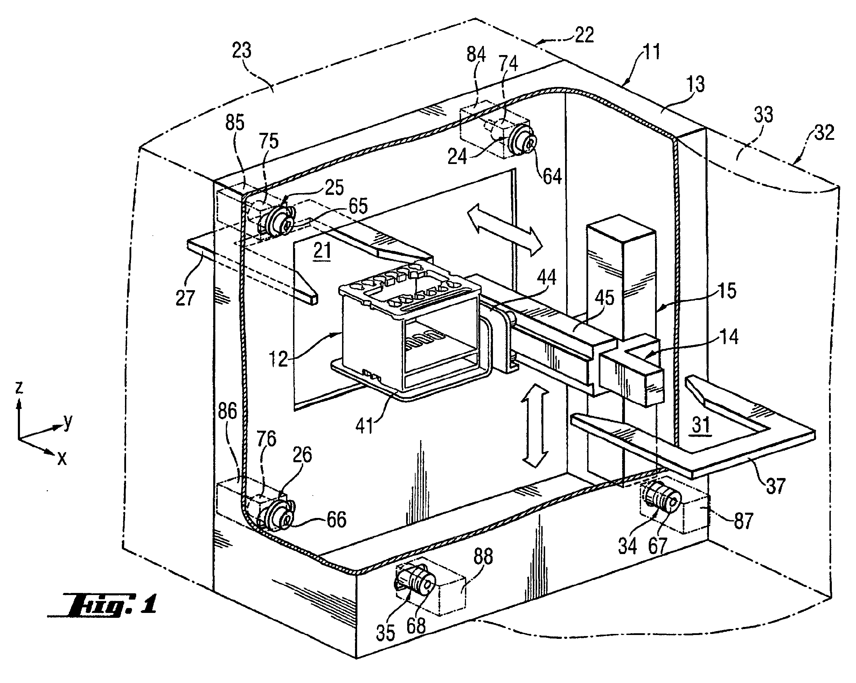

Fig. 1 schematically represents an apparatus 11 according to the invention for transporting components within an automatic analyzer system. Apparatus 11 is arranged between a first apparatus 22 and a second apparatus 32 which both form part of an analyzer system. Apparatus 11 comprises a component carrier 12 suitable for holding a plurality of said components, and transport means 41, 14, 15 for transporting component carrier 12 from a first position 21 in apparatus 22 to at least a second position 31 in apparatus 32.

The first position 21 is for instance a predetermined position in a loading bay 27 mounted on apparatus 22. Loading bay 27 serves for receiving component carrier 12 when it is brought to it by transport means 41, 14, 15.

The second position 31 is for instance a predetermined position in a loading bay 37 mounted on apparatus 32. Loading bay 37 serves for receiving component carrier 12 when it is brought to it by transport means 41, 14, 15.

Apparatus 22 has a housing 23. Apparatus 32 has a housing 33. Apparatus 11 has a housing 13 which contains transport means 41, 14, 15. Housing 13 is connected with housing 23 of apparatus 22 and aligned with housing 33 of apparatus 32. As described hereinafter an apparatus according to the invention can be connected to more than 2 apparatuses which form part of the analyzer system.

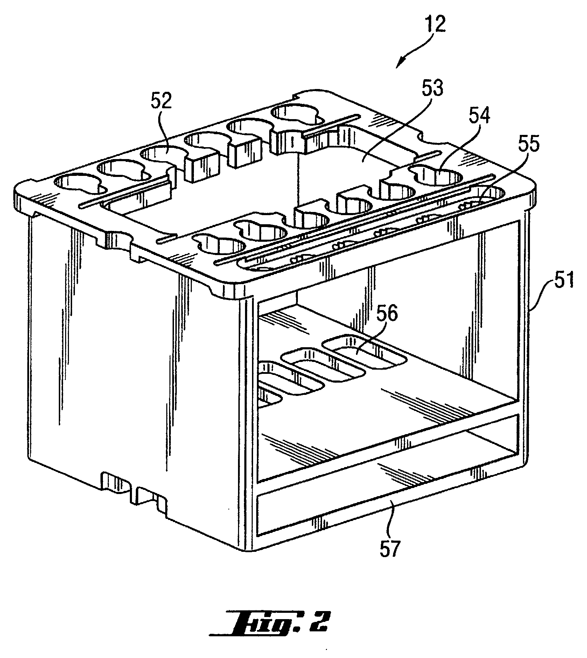

As can be appreciated from Fig. 2, a preferred embodiment of component carrier 12 has the general shape of a hollow box 51 which has various openings 52-55 and chambers 56 and which is suitable for holding a plurality of components of different shapes and sizes. Box 51 has a bottom wall 57. The outer surface of bottom wall 57 comprises at least one metallic part (not shown in the enclosed drawings) which is apt to be attracted and hold by a magnetic force.

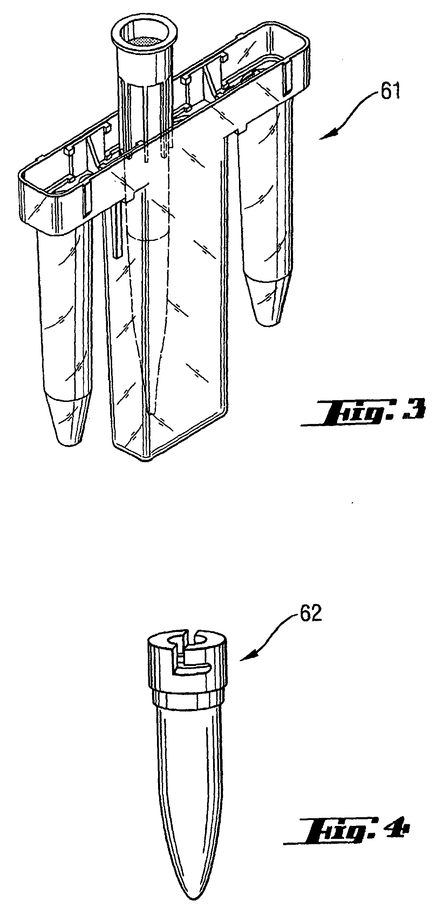

Fig. 3 shows a first example of a component which can be inserted in and transported by component carrier 12. The component 61 shown by Fig. 3 is e.g. a specimen processing unit of the type used in an apparatus for separating nucleic acid from a sample cell material.

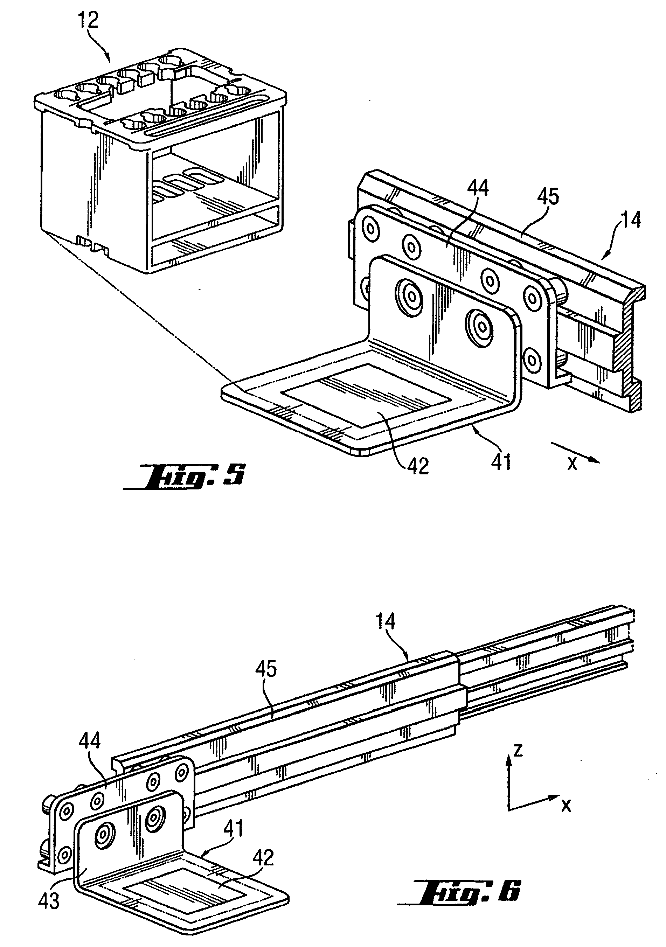

Fig. 4 shows a second example of a component which can be inserted in and transported by component carrier 12. The component 62 shown by Fig. 3 is e.g. a sample tube of the type used in an apparatus for separating nucleic acid from a sample cell material.

As can be appreciated from Fig. 1, the above mentioned transport means for transporting component carrier 12 comprise a movable tray 41 for holding component carrier 12 and for moving it from said position 21 to position 31. To achieve this purpose tray 41 has an upper surface which is at least partially covered by a magnetic foil 42 as shown by Fig. 5. During transport of component carrier 12 on tray 41 the magnetic force exerted by magnetic foil 42 on the at least one metallic part on the outer surface of the bottom wall of component carrier 12 holds the latter carrier on tray 41 until it is properly positioned in one of the loading bays 27 or 37. The magnetic force exerted by foil 42 is strong enough to ensure that component carrier 12 is kept on tray 41 during its transport, component carrier 12 is however revolvable about the Z-axis and is free to be moved along the X and Y axes, respectively.

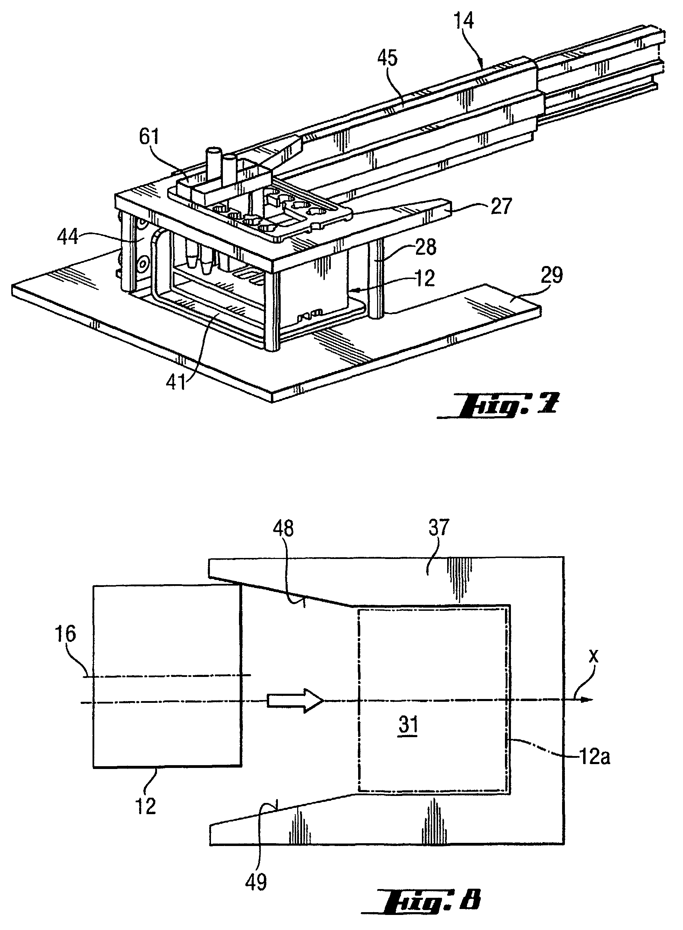

As can be further appreciated from Fig. 1, the above mentioned transport means for transporting component carrier 12 further comprise a transport device 14 for moving said tray 41 back and forth in horizontal direction along the X-axis towards and away from each of said loading bays 27 respectively 37. A preferred embodiment of transport device 14 is a telescopic arm 45 which has a movable part 44 and which is represented in Fig. 6. Tray 41 is attached to movable part 44 of telescopic arm 45. Telescopic arm 45 moves part 44 horizontally in X-direction shown in Fig. 6. In order to be able to bring a component carrier 12 from loading bay 27 on one side of apparatus 11 to a loading bay 37 on the opposite side of apparatus 11, telescopic arm 45 is adapted to extend its outer end to both sides of apparatus 11. On its way from one loading bay to the other movable part 44 of telescopic arm 45 passes through the middle of apparatus 11.

Fig. 7 illustrates positioning of component carrier 12 in loading bay 27 by means of tray 41 moved by means of telescopic arm 45. As can be appreciated from Fig. 7 loading bay 27 is mounted by means of supports 28 on a plate 29. Plate 29 is mounted on apparatus 22.

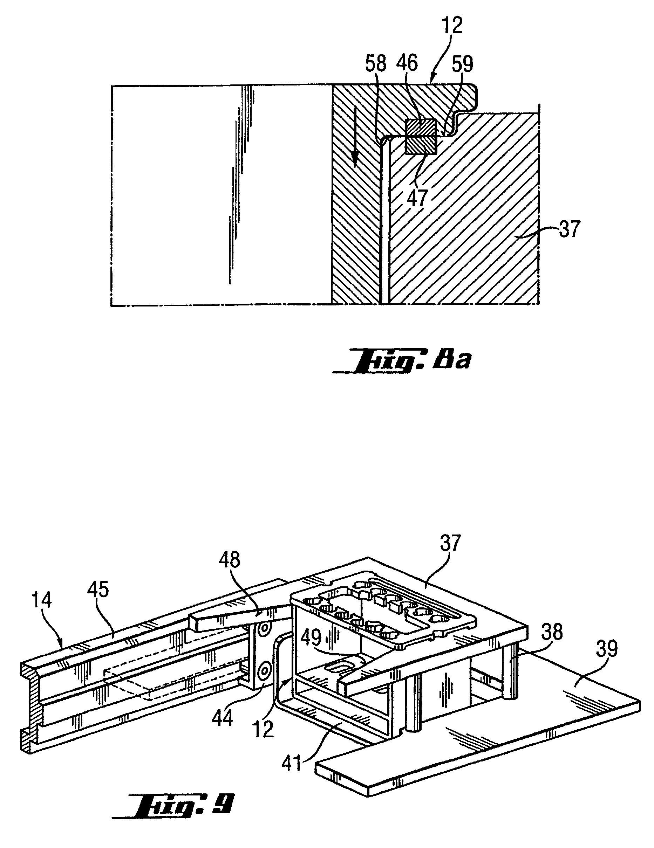

As can be appreciated from Fig. 8, which illustrates positioning of component carrier 12 in loading bay 37, the transport means according to the invention do not require that component carrier 12 be perfectly aligned with the position it has eventually to occupy in loading bay 37, because in a preferred embodiment each of the loading bays 27, 37 has guide surfaces which bring component carrier 12 into alignment with that position as component carrier 12 is moved by tray 41 and telescopic arm 45 into position 31 in loading bay 37. Broken line rectangle 12a illustrates the position taken by carrier 12 when it reaches position 31.

Fig. 8a shows schematically a partial cross-sectional view of component carrier 12 and loading bay 37 in a plane normal to the X-axis in Fig. 8 when carrier 12 reaches position 12a in Fig. 8

As shown in Fig. 8a, component carrier 12 has side walls each of which has at their upper end a shoulder 58 which rest on a top surface 59 of loading bay 37. A ferromagnetic metal piece 46 is lodged in at least one recess of shoulder 58. When carrier 12 reaches its predetermined position in X-direction with respect to the loading bay 37 metal piece 46 lies in face of a permanent magnet 47 which is lodged in at least one recess of top surface 59 of loading bay 37.

As can be appreciated from Fig. 8a top surface 59 of loading bay is so shaped that it matches the shape of shoulder 58.

Positioning of component carrier 12 at position 31 in loading bay 37 by means of the above mentioned transport means is performed in two steps. In a first step carrier 12 is moved in X-direction towards loading bay 37 as represented in Fig. 8. During this first step carrier 12 is maintained at a constant height (in Z-direction) at which shoulder 58 lies at a predetermined distance from and above top surface 59. During this first step guide surfaces 48, 49 guide carrier 12 so that when it reaches position 31 in loading bay 37 the symmetry axis 16 of carrier 12 substantially coincides with the central axis of loading bay 37 which coincides with the X-axis represented in Fig. 8. In a second step which follows the first step, carrier 12 is slowly lowered. During this second step top surface 59 of loading bay 37 guides shoulder 58 of carrier 12 and at a given point metal piece 46 of carrier 12 is attracted and hold by magnet 47 of loading bay 37. In this way carrier 12 eventually reaches its final position 31 in loading bay 37 in all three directions (X-, Y- and Z-direction).

Fig. 9 shows component carrier 12 duly positioned in loading bay 37. As can be appreciated from Fig. 9 loading bay 37 is mounted by means of supports 38 on a plate 39. Plate 39 is mounted on apparatus 32.

As can be also appreciated from Fig. 1, the above mentioned transport means for transporting component carrier 12 further comprise a transport device 15 for moving said tray 41 upwards and downwards in vertical direction along the Z-axis.

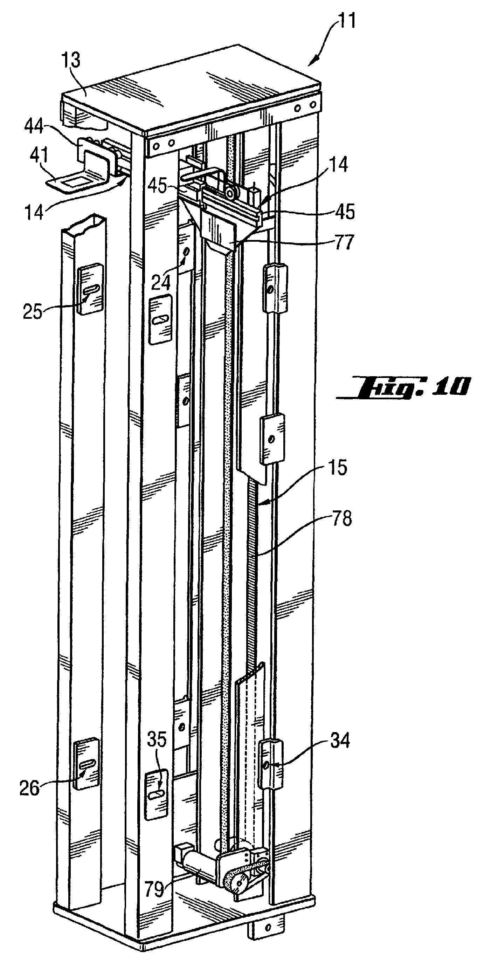

Fig. 10 shows a preferred embodiment of an apparatus 11 according to the invention. Fig. 10 shows more in detail the above mentioned transport means 14 and 15.

Transport device 15 comprises a carriage 77 which is moved upwards and downwards in vertical direction along the Z-axis by means of a toothed belt 78 driven by a gearmotor 79. Transport device 15 further includes a counterweight.

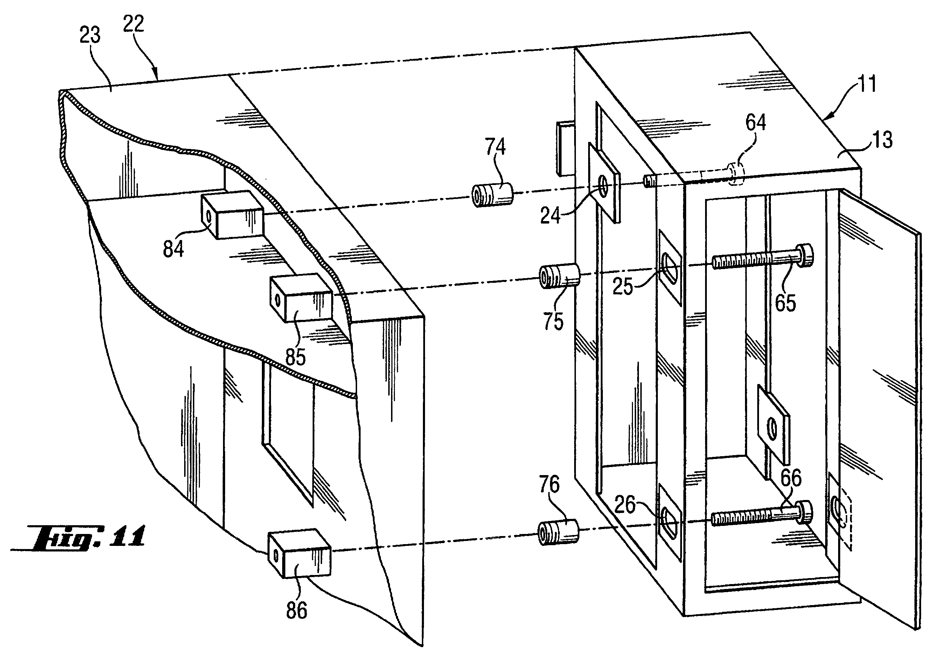

As schematically represented in Fig. 1, housing 13 of apparatus 11 in Fig. 1 is connected to housing 23 of apparatus 22 by means of screw connections 24, 25, 26. These connections are represented more in detail in Fig. 11, which shows screws 64, 65, 66, bolts 74, 75, 76 and bolt holders 84, 85, 86 used to build screw connections 24, 25, 26.

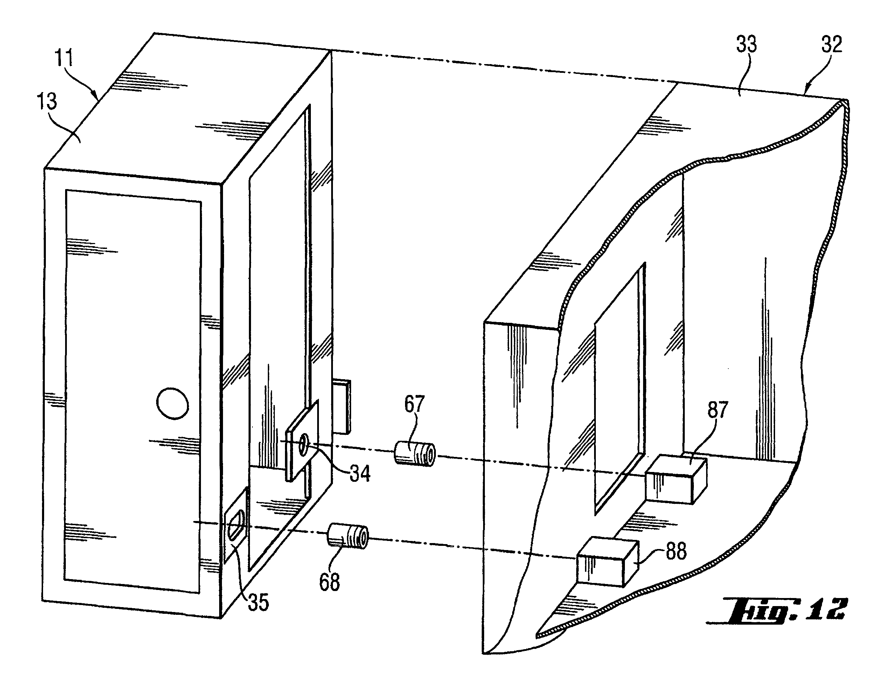

As schematically represented in Fig. 1, housing 13 of apparatus 11 in Fig. 1 is aligned to housing 33 of apparatus 32 by means of bolts 34, 35. This alignment is represented more in detail in Fig. 12, which shows bolts 67 and 68 and bolt holders 87 and 88 used to build contacts 34 and 35.

The advantage of the above mentioned screw and bolt connections is that they make possible to align each of apparatuses 22 and 32, which have each a considerable weight, with an apparatus 11 according to the invention with the necessary accuracy, without special alignment equipment, and so that even when the apparatuses are connected and properly aligned with each other, each of the apparatuses stands on its own individual base. The above mentioned screw and bolt connections thus prevent that the apparatus walls which are in contact with each other have to bear unnecessary and unpredictable contact forces for alignment purposes. Preventing that such forces arise is advantageous, because it eliminates the need for a reinforcement of the frame structures of the apparatuses, which would be otherwise necessary.

An apparatus according to the invention can be used in various configurations with at least two apparatuses which form part of an analyzer system.

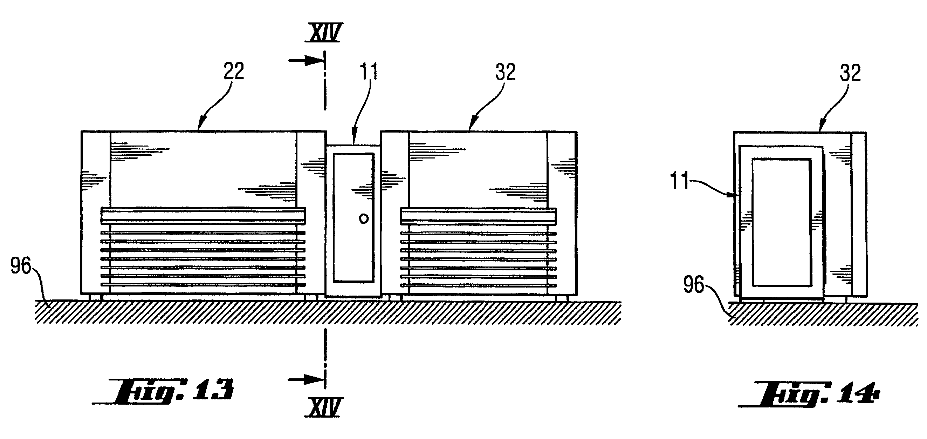

Fig. 13 shows a first configuration wherein a first embodiment of an apparatus 11 according to the invention is arranged between an apparatus 22 and an apparatus 32 which form part of an analyzer system. All three apparatuses are positioned on a table 96. Apparatus 11 provides the means for transporting a component carrier of the type described above between apparatuses 22 and 32. Fig. 14 shows a schematic side view showing of apparatuses 11 and 32 shown in Fig. 13.

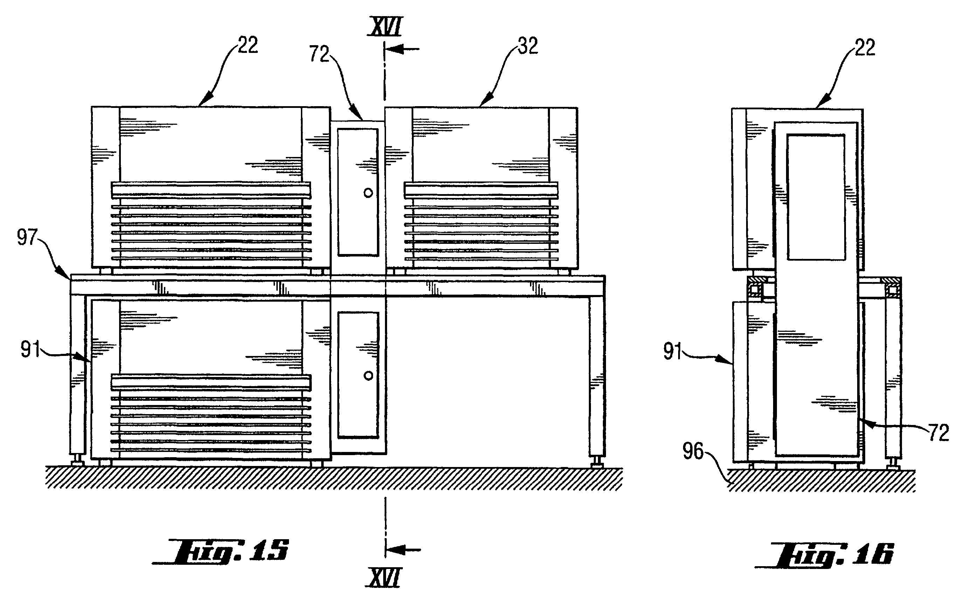

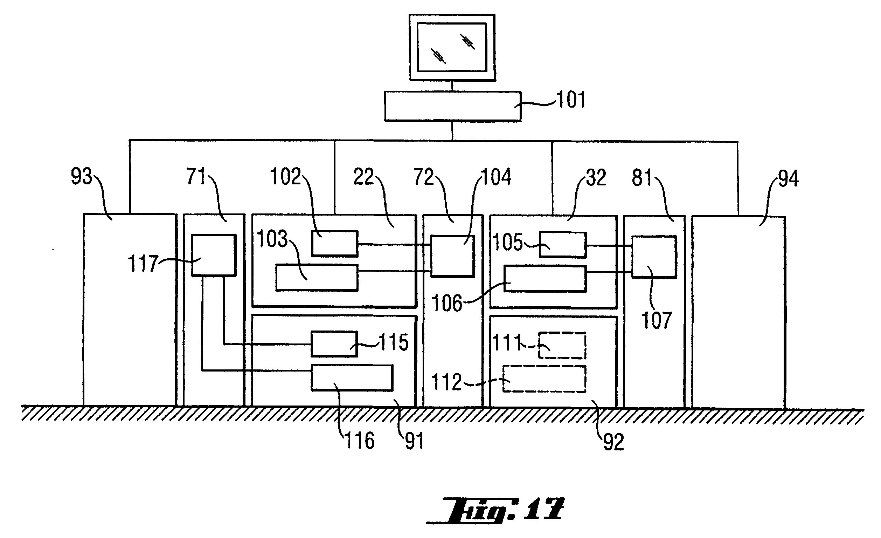

Fig. 15 shows a second embodiment of an apparatus 72 according to the invention arranged between apparatuses 22 and 91 on one side and an apparatus 32 on the opposite side. Apparatuses 22, 91 and 32 form part of an analyzer system. Apparatuses 22 and 32 are positioned on a table 97. Apparatus 91 is positioned under table 97. Apparatus 72 provides the means for transporting a component carrier of the type described above between all three apparatuses 22, 91 and 32. Fig. 16 is a schematic side view showing of apparatuses 72, 22 and 91 shown in Fig. 15.

Apparatus 72 shown in Figures 15 and 16 is longer than apparatus 11 shown in Figures 13 and 14. As can be appreciated from the above description, apparatus 11 is preferably used for transporting a component carrier 12 between two apparatuses 22, 32 which for part of an analyzer system, whereas apparatus 72 is preferably used for transporting a component carrier 12 between three apparatuses 22, 32, 91 which for part of an analyzer system.

As can be appreciated from Fig. 17 which shows a block diagram of an analyzer system comprising several apparatuses 71, 72, 81 according to the invention and a number of apparatuses 22, 32, 91, 92, 93, 94 which form part of the analyzer system, the operation of each of the apparatuses according to the invention is controlled by the control unit (CPU) of one of the apparatuses of the analyzer system it is connected to. For instance, the operation of apparatus 72, which provides transport of a component carrier 12 between apparatuses 22, 32 and 91, is controlled by block 104, which in turn is controlled by the CPU 102 of apparatus 22. Block 104 receives energy from power supply 103 of apparatus 22. In a similar way, the operation of apparatus 81, which provides transport of a component carrier between apparatuses 32, 92 and 94, is controlled by block 107, which in turn is controlled by the CPU 105 of apparatus 32. Block 107 receives energy from power supply 106 of apparatus 32. Analogously, the operation of apparatus 71, which provides transport of a component carrier between apparatuses 22, 91 and 93, is controlled by block 117, which in turn is controlled by the CPU 115 of apparatus 91. Block 117 receives energy from power supply 116 of apparatus 91.

## Claims

1. An apparatus for transporting components within an automatic analyzer system, said apparatus comprising:
(a) a component carrier (12) suitable for holding a plurality of said components,
(b) a transport mechanism (41, 14, 15) for moving said component carrier (12) holding system components between a first loading bay (27) in a first housing (23) and a second loading bay (37) in a second housing (33), and
a transport housing (13) for said transport mechanism (41, 14, 15), said transport housing (13), said first housing (23), and said second housing (33) each incorporating connection means for connecting and aligning said first housing (23) and said second housing (33) to said transport housing (13),
said apparatus being **characterized in that**
said transport mechanism (41, 14, 15) includes a movable tray (41) adapted to receive and transport said component carrier (12) placed thereon,
said component carrier (12) being removable from said tray (41),
said component carrier (12), while held on said tray (41) being free to be moved with respect to said tray (41) in order to be properly positioned at one of said loading bays (27, 37), and
said component carrier (12) being suitable for holding at least one component to be analyzed by said system.

2. Apparatus according to claim 1, wherein said component carrier (12) is a hollow box (51) with various openings (52-55) and chambers (56) suitable for holding a plurality of components (61, 62) of different shapes and sizes, said box (51) having a bottom wall (57) the outer surface of which comprises at least one metallic part which is capable of being held by a magnetic force.

3. Apparatus according to claim 1, wherein
said component carrier (12) is maintained in its position on said tray (41) by magnetic means during movement of said tray between said first and said second apparatus (22, 32).

4. Apparatus according to claim 3, wherein said movable tray (41) has an upper surface which is at least partially covered by a magnetic foil (42).

5. Apparatus according to claim 1, wherein said transport mechanism further comprise a first transport device (14) for moving said tray (41) in horizontal direction towards and away from each of said first respectively second positions (21, 31).

6. Apparatus according to claim 5, wherein said first transport device (14) is a telescopic arm (45) and said tray (41) is attached to a movable part (44) of said telescopic arm (45).

7. Apparatus according to claim 5, wherein said transport mechanism comprise a second transport device (15) for moving said first transport device (14) upwards and downwards in vertical direction.

8. Apparatus according to any of claims 3 to 7, wherein said component carrier (12) and/or said loading bay (27, 37) comprise means (46, 47) which attract each other by magnetic force and contribute to accurately define a predetermined position of said carrier with respect to said loading bay.

9. Apparatus according to any of claims 1 to 8, wherein the operation of said transport mechanism (41, 14, 15) is controlled by a control unit (104) which is part of the transport mechanism.

## Patentansprüche

1. Vorrichtung zum Befördern von Komponenten innerhalb eines automatischen Analysesystems, umfassend:
(a) einen Komponententräger (12), der dazu ausgebildet ist, eine Mehrzahl von Komponenten aufzunehmen,
(b) einen Transportmechanismus (41,14,15) zum Bewegen des Systemkomponenten tragenden Komponententrägers (12) zwischen einer ersten Position (21) in einem ersten Ladebereich (27) in einem ersten Gehäuse (23) und einer zweiten Position (31) in einem zweiten Ladebereich (37) in einem zweiten Gehäuse (33), und
ein Transportgehäuse (13) für den Transportmechanismus (41,14,15), wobei das Transportgehäuse (13), das erste Gehäuse (23) und das zweite Gehäuse (33) jeweils Verbindungsmittel aufweisen, um das erste Gehäuse (23) und das zweite Gehäuse (33) mit dem Transportgehäuse (13) zu verbinden und auf dieses auszurichten,
**dadurch gekennzeichnet, daß**
der Transportmechanismus (41,14,15) eine bewegliche Ablage (41) hat, die dazu ausgebildet ist, den auf ihr angeordneten Komponententräger (12) aufzunehmen und zu befördern, wobei
der Komponententräger (12) von der Ablage (41) abgenommen werden kann,
der Komponententräger (12), während er auf der Ablage (41) angeordnet ist, relativ zu der Ablage (41) frei bewegt werden kann, um in einem der Ladebereiche (27,37) richtig positioniert werden zu können, und
der Komponententräger (12) dazu ausgebildet ist, mindestens eine Komponente aufzunehmen, die von dem Analysesystem zu analysieren ist.

2. Vorrichtung nach Anspruch 1, wobei der Komponententräger (12) ein hohler Behälter (51) mit mehreren Öffnungen (52-55) und Kammern (56) zum Aufnehmen einer Mehrzahl von Komponenten (61,62) mit verschiedenen Formen und Abmessungen ist und eine Bodenwand (57) aufweist, deren Außenfläche mindestens ein metallisches Teil aufweist, das von einer magnetischen Kraft gehalten werden kann.

3. Vorrichtung nach Anspruch 1, wobei der Komponententräger (12) während des Bewegens der Ablage (41) zwischen der ersten und zweiten Vorrichtung (22,32) mittels magnetischer Kräfte in seiner Position auf der Ablage (41) gehalten wird.

4. Vorrichtung nach Anspruch 3, wobei die bewegliche Ablage (41) eine obere Fläche hat, die mindestens teilweise durch eine magnetische Folie (42) bedeckt ist.

5. Vorrichtung nach Anspruch 1, wobei der Transportmechanismus ferner eine erste Transportvorrichtung (14) zum Bewegen der Ablage (41) in horizontaler Richtung zu bzw. weg von der ersten und zweiten Position (21, 31) aufweist.

6. Vorrichtung nach Anspruch 5, wobei die erste Transportvorrichtung (14) ein Teleskoparm (45) ist und die Ablage (41) an einem beweglichen Teil (44) des Teleskoparms (45) befestigt ist.

7. Vorrichtung nach Anspruch 5, wobei der Transportmechanismus eine zweite Transportvorrichtung (15) aufweist, um die erste Transportvorrichtung (14) in vertikaler Richtung auf- und abwärts bewegen zu können.

8. Vorrichtung nach einem der Ansprüche 3 bis 7, wobei der Komponententräger (12) und/oder der Ladebereich (27,37) Mittel (46,47) aufweisen, die sich durch magnetische Kräfte gegenseitig anziehen und dazu beitragen, eine vorbestimmte Position des Trägers relativ zu dem Ladebereich genau zu definieren.

9. Vorrichtung nach einem der Ansprüche 1 bis 8, wobei der Betrieb des Transportmechanismus (41,14,15) von einer Steuereinheit (104), die Teil des Transportmechanismus ist, gesteuert wird.

## Revendications

1. Appareil pour transporter des composants dans un système d'analyse automatique, lequel appareil comprend :
(a) un support de composants (2) permettant de maintenir plusieurs desdits composants ;
(b) un mécanisme de transport (41, 14, 15) pour déplacer ledit support de composants (12) maintenant des composants système entre une première position (21) dans une première baie de chargement (27) dans un premier boîtier (23), et une seconde position (31) dans une seconde baie de chargement (37) dans un second boîtier (33) ; et
(c) un boîtier de transport (13) pour ledit mécanisme de transport (41, 14, 15), ledit boîtier de transport (13), ledit premier boîtier (23) et ledit second boîtier (33) comportant chacun des moyens de connexion permettant de connecter ledit premier boîtier (23) et ledit second boîtier (33) au boîtier de transport (13) et de les aligner par rapport à ce dernier ;
lequel appareil est **caractérisé en ce que** :
- ledit mécanisme de transport (41, 14, 15) comprend un plateau mobile (41) conçu pour recevoir et transporter ledit support de composants (12) qui y est placé dessus ;
- ledit support de composants (12) peut être retiré dudit plateau (41) ;
- ledit support de composants (12), pendant qu'il est maintenu sur ledit plateau (41), peut se déplacer librement par rapport au dit plateau (41) afin d'être correctement positionné au niveau d'une desdites baies de chargement (27, 37) ; et
- ledit support de composants (12) peut maintenir au moins un composant devant être analysé par le système.

2. Appareil selon la revendication 1, dans lequel ledit support de composants (12) consiste en une boîte creuse (51) comportant diverses ouvertures (52 à 55) et chambres (56) servant à maintenir plusieurs composants (61, 62) de tailles et de formes différentes, laquelle boîte (51) comprend une paroi de fond (57) dont la surface externe comprend au moins une partie métallique pouvant être maintenue par une force magnétique.

3. Appareil selon la revendication 1, dans lequel ledit support de composants (12) est maintenu en position sur ledit plateau (41) par un moyen magnétique pendant le mouvement dudit plateau entre lesdits premier et second appareils (22, 32).

4. Appareil selon la revendication 3, dans lequel ledit plateau mobile (41) possède une surface supérieure qui est au moins partiellement couverte par une feuille magnétique (42) .

5. Appareil selon la revendication 1, dans lequel ledit mécanisme de transport comprend en outre un premier dispositif de transport (14) pour déplacer ledit plateau (41) dans le sens horizontal et l'approcher et l'éloigner de chacune desdites première et seconde positions (21, 31), respectivement.

6. Appareil selon la revendication 5, dans lequel ledit premier dispositif de transport (14) consiste en un bras télescopique (45), ledit plateau (41) étant fixé à une partie mobile (44) dudit bras télescopique (45).

7. Appareil selon la revendication 5, dans lequel ledit mécanisme de transport comprend un second dispositif de transport (15) permettant de déplacer ledit premier dispositif de transport (14) vers le bas et vers le haut dans le sens vertical.

8. Appareil selon l'une quelconque des revendications 3 à 7, dans lequel ledit support de composants (12) et/ou ladite baie de chargement (27, 37) comprennent des moyens (46, 47) qui s'attirent l'un l'autre grâce à une force magnétique et qui contribuent à définir avec précision une position prédéterminée dudit support par rapport à ladite baie de chargement.

9. Appareil selon l'une quelconque des revendications 1 à 8, dans lequel le fonctionnement dudit mécanisme de transport (41, 14, 15) est commandé par une unité de commande (104) qui fait partie du mécanisme de transport.
